# EUROPÄISCHE PATENTANMELDUNG

(11) **EP 2 241 854 A2**
(43) Veröffentlichungstag der Anmeldung: **20.10.2010**
(21) Anmeldenummer: 10151092.3
(22) Anmeldetag: 19.01.2010
(51) Int. Cl.: G01B 3/22, G01B 5/00

(54) **Messuhrhalterung**

(30) Priorität: 17.04.2009 DE 202009005794 U
(71) Anmelder: Schropp, Dirk, 86157 Augsburg (DE)
(72) Erfinder: Schropp, Dirk, 86157 Augsburg (DE)
(74) Vertreter: Charrier, Rapp & Liebau

(57) **Zusammenfassung**

Die Erfindung betrifft eine Messuhrhalterung mit einem Halteteil (1) und einer im Halteteil (1) angeordneten Aufnahme zur lösbaren Befestigung einer Messuhr (2). Um eine wiederholgenaue Nullpunktjustierung in axialer und radialer Richtung zu ermöglichen, enthält die Aufnahme eine in dem Halteteil (1) axial verstellbare und durch ein Sicherungselement (10) in einer gewünschten Stellung gegenüber dem Halteteil (1) fixierbare Aufnahmebuchse (8) mit einer festen Bezugsfläche (14) zur Definition einer Nullstellung der Messuhr (2).

## Beschreibung

Die Erfindung betrifft eine Messuhrhalterung nach dem Oberbegriff des Anspruchs 1.

Die bisher bekannten Messuhrhalterungen weisen üblicherweise ein Halteteil mit einer Aufnahmebohrung auf, in die ein Einspannschaft einer Messuhr eingesetzt und über Schrauben oder andere Klemmelemente fixiert werden kann. Dabei ergibt sich allerdings die Problematik, dass üblicherweise keine definierte Anlagefläche zwischen der Messuhr und dem Halteteil vorgesehen ist, so dass es besonders beim häufigen Wechseln der Messuhr zu Messungenauigkeiten kommen kann.

Aufgabe der Erfindung ist es, eine Messuhrhalterung der eingangs genannten Art zu schaffen, die eine wiederholgenaue Nullpunktjustierung in axialer und radialer Richtung ermöglicht.

Diese Aufgabe wird durch eine Messuhrhalterung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Messuhrhalterung weist die im Halteelement vorgesehene Aufnahme zur lösbaren Befestigung einer Messuhr eine in dem Halteteil axial verstellbare und durch ein Sicherungselement in einer gewünschten Stellung gegenüber dem Halteteil fixierbare Aufnahmebuchse mit einer festen Bezugsfläche zur Definition einer Nullstellung der Messuhr auf. Die Bezugsfläche kann als feste Anlagefläche für eine in die Aufnahmebuchse einsetzbare Einsteckbuchse oder ein an dem Halteteil befestigbares Einstellteil dienen. Durch die genaue Anordnung der Einsteckbuchse oder des Einstellteils bezüglich des Halteteils wird eine wiederholgenaue Nullpunktjustierung der Messuhr ermöglicht.

In einer zweckmäßigen Ausführung ist in die Aufnahmebuchse eine mit der Messuhr fest verbundene Einsteckbuchse einsetzbar. Die Einsteckbuchse weist zweckmäßigerweise eine vordere Stirnfläche zur Anlage an der Bezugsfläche der Aufnahmebuchse auf. Dadurch wird selbst bei wiederholter Demontage und Montage der Messuhr an dem Halteteil eine wiederholgenaue Positionierung der Messuhr erreicht.

Zum einfachen Wechseln der Messuhr kann die Einsteckbuchse über eine Rastverbindung lösbar in der Aufnahmebuchse gehalten sein. Die Rastverbindung wird zweckmäßigerweise durch einen in der Aufnahmebuchse angeordneten Kugelrastbolzen und eine zugehörige Rastnut in der Einsteckbuchse gebildet.

In einer weiteren zweckmäßigen Ausführung kann an der Aufnahmebuchse ein Einstellteil mit einer Auflage für einen Messkörper der Messuhr befestigt sein. Das Einstellteil weist zweckmäßigerweise einen Schlitz mit einer Anlagefläche zur Anlage an der Bezugsfläche der Aufnahmebuchse auf. Auch dadurch ist eine einfache und vorteilhafte Nullpunktjustierung möglich.

In einer weiteren vorteilhaften Ausgestaltung ist an der Messuhr ein Messuhrbügel mit einem Halteteil zur magnetischen Halterung einer am Ende eines Messbolzens der Messuhr angeordneten Endkappe befestigt. Dadurch kann der Messbolzen der Messuhr in einer geöffneten Stellung gehalten werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel eines erfindungsgemäßen Messuhrhalters in einer Perspektive;
- **Figur 2**: den in Figur 1 gezeigten Messuhrhalter in einem Längsschnitt;
- **Figur 3**: ein zweites Ausführungsbeispiel eines erfindungsgemäßen Messuhrhalters in einer Perspektive und
- **Figur 4**: den in Figur 3 gezeigten Messuhrhalter in einem Längsschnitt.

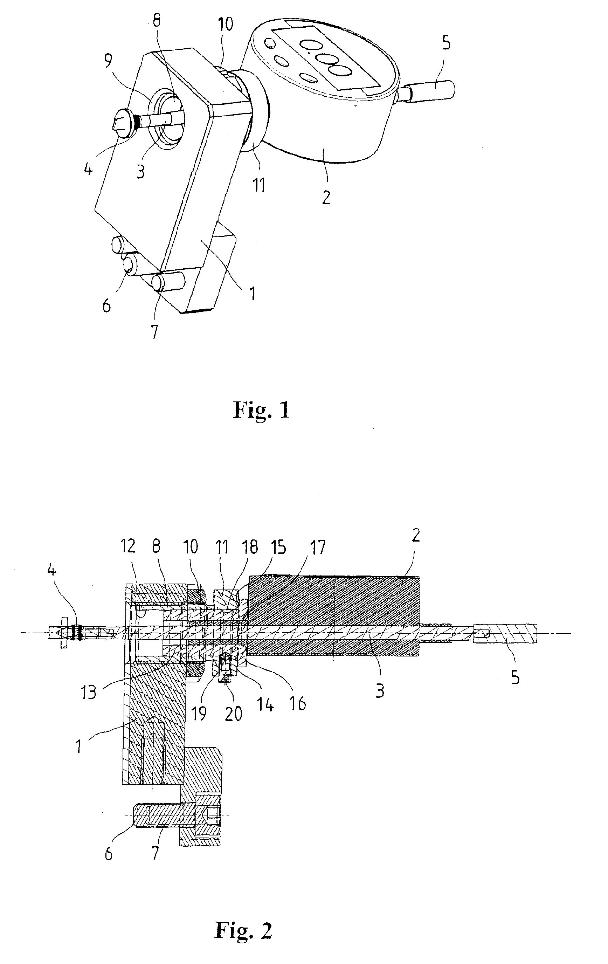

Die in den Figuren 1 und 2 in einer Perspektive und einer Schnittansicht dargestellte Messuhrhalterung umfasst ein Halteteil 1, das eine Aufnahme zur lösbaren Befestigung einer Messuhr 2 aufweist. Die Messuhr 2 enthält in an sich bekannter Weise einen axial verschiebbaren Messbolzen 3, an dessen vorderen Ende ein z.B. als Kugeleinsatz ausgeführter Messeinsatz 4 befestigt ist. An dem hinteren Ende des Messbolzens 3 kann eine im Weiteren noch näher erläuterte Endkappe 5 befestigt sein.

Das hier gekröpft ausgeführte Halteteil 1 kann über eine Schraube 6 und Stifte 7 oder andere geeignete Befestigungselemente an einem Vorrichtungsbauteil, einer Maschine oder dgl. befestigt werden. Die Aufnahme zur lösbaren Befestigung der Messuhr 2 umfasst eine mit Außengewinde versehene Aufnahmebuchse 8, die in einer mit Innengewinde versehenen Bohrung 9 des Halteteils 1 axial verstellbar angeordnet ist und durch ein hier als Kontermutter ausgeführtes Sicherungselement 10 in einer gewünschten Stellung gegenüber dem Halteteil 1 axial gesichert werden kann. Durch Lösen des Sicherungselements 10 kann die Aufnahmebuchse 8 gedreht und über das Gewinde in Axialrichtung gegenüber dem Halteteil 1 verstellt werden. Ist eine gewünschte Stellung der Aufnahmebuchse 8 erreicht, kann das hier als Kontermutter ausgebildete Sicherungselement 10 festgezogen und dadurch die Aufnahmebuchse 8 in einer gewünschten Stellung gegenüber dem Halteteil 1 axial gesichert werden.

Wie besonders aus Figur 2 hervorgeht, weist die Aufnahmebuchse 8 einen Ringbund 11 und eine durchgehende Führungsbohrung 12 zur Aufnahme einer an der Messuhr 2 befestigten Einsteckbuchse 13 auf. Die Aufnahmebuchse 8 enthält an der hinteren Stirnseite des Ringbunds 11 eine definierte Bezugsfläche 14, an der in einer vorgesehenen Einbaustellung der Messuhr 2 eine vordere Stirnfläche 15 eines Ringbunds 16 der Einsteckbuchse 13 zur Anlage gelangt. Die vorzugsweise aus Bronze hergestellte Einsteckbuchse 13 ist z.B. durch Verkleben fest auf einem Einspannschaft 17 der Messuhr 2 angebracht. Die Einsteckbuchse 13 weist an ihrer Außenseite eine Ringnut 18 zum Eingriff einer Rastkugel 19 mindestens eines in dem Ringbund 11 der Aufnahmebuchse 8 radial angeordneten Kugelrastbolzens 20 auf. Der Kugelrastbolzen 20 enthält in an sich bekannter Weise eine Feder, durch welche die Rastkugel nach außen beaufschlagt wird. Der Kugelrastbolzen 20 und die Ringnut 18 sind derart angeordnet, dass die Rastkugel 19 in der vorgegebenen Einsteckposition der Einsteckbuchse 10 innerhalb der Aufnahmebuchse 8 in die Ringnut 18 der Einsteckbuchse 13 eingreift. Über die in die Ringnut 18 eingreifende, federbeaufschlagte Rastkugel 19 wird die Einsteckbuchse 13 beim Einsetzen in die Aufnahmebuchse 8 so nach innen gezogen, dass die Einsteckbuchse 10 mit ihrer vorderen Stirnfläche 15 gegen die Bezugsfläche 14 der Aufnahmebuchse 8 angedrückt wird. Dadurch wird erreicht, dass der Messeinsatz 4 selbst bei wiederholter Demontage und Montage der Messuhr 2 eine definierte Lage gegenüber dem Halteteil 1 einnimmt, so dass eine gleichbleibende Nullpunktjustierung in axialer und radialer Richtung ermöglicht wird.

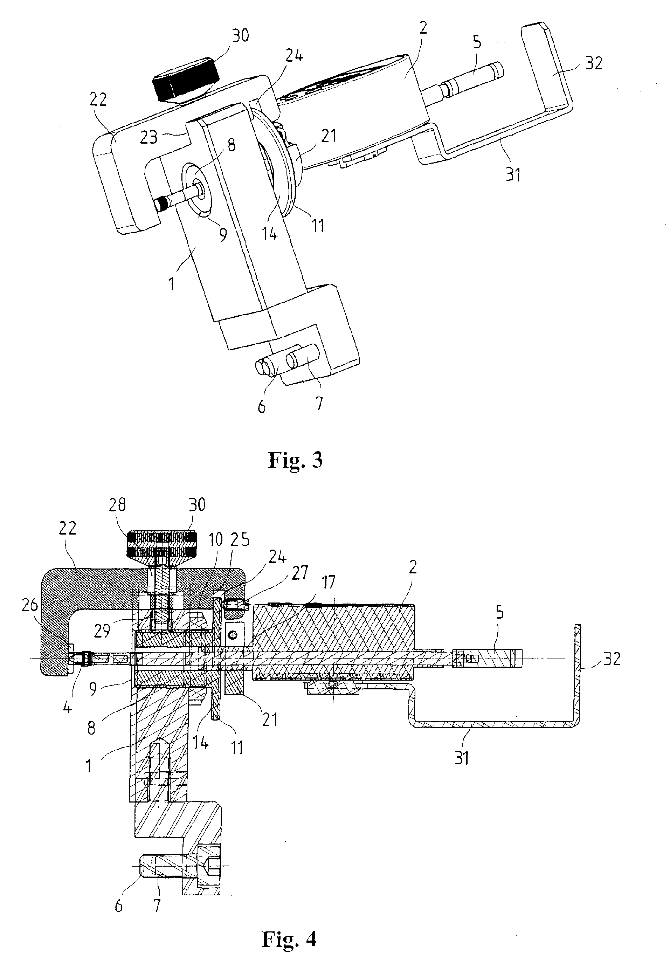

In den Figuren 3 und 4 ist ein weiteres Ausführungsbeispiel einer Messuhrhalterung gezeigt. Auch hier ist ein gekröpftes Halteteil 1 zur lösbaren Befestigung einer Messuhr 2 vorgesehen. Das Halteteil 1 ist ebenfalls über eine Schraube 6 und Stifte 7 an einem Vorrichtungsbauteil oder einer Maschine befestigbar. Wie bei der Ausführung der Figuren 1 und 2 enthält das Halteteil 1 eine mit Innengewinde versehene Bohrung 9, in der eine mit Außengewinde versehene Aufnahmebuchse 8 axial verstellbar angeordnet ist und durch ein ebenfalls als Kontermutter ausgeführtes Sicherungselement 10 in einer gewünschten Stellung gegenüber dem Halteteil 1 axial gesichert werden kann. Die hier verwendete Aufnahmebuchse 8 weist neben einem Ringbund 11 mit einer definierten Bezugsfläche 14 an dessen vorderen Stirnseite ein geschlitztes hinteres Klemmstück 21 zur Befestigung des Einspannschafts 17 der Messuhr 2 auf.

Auf der Oberseite des Halteteils 1 ist bei der in Figur 3 und 4 gezeigten Ausführung ein winkelförmiges Einstellteil 22 innerhalb einer Nut 23 verschiebbar geführt. Das Einstellteil weist im hinteren Bereich einen Schlitz 24 mit einer Anlagefläche 25 zur Anlage an der Bezugsfläche 14 der Aufnahmebuchse 8 und am vorderen abgewinkelten Bereich eine Auflage 26 für den Messkörper 4 der Messuhr auf. Durch einen von der Rückseite des Einstellteils 22 in den Schlitz 24 ragenden Kugelrastbolzen 27 wird das Einstellteil 22 mit seiner Anlagefläche 25 gegen und die Bezugsfläche 14 der Aufnahmebuchse gedrückt. Auch dadurch wird eine definierte Stellung des Messkörpers 4 bezüglich des Halteteils 1 erreicht. Über eine durch ein Langloch 28 des Einstellteils 22 in eine Gewindebohrung 29 ragende Rändelschraube 30 kann das Einstellteil 22 gegenüber dem Halteteil 1 fixiert werden.

An der Unterseite der Messuhr 2 ist an deren Gehäuse ein Messuhrbügel 31 mit einem rechtwinklig nach oben gebogenen hinteren Halteteil 32 festgeschraubt. Über eine magnetische Endkappe 5, die an dem hinteren Halteteil 32 gehalten wird, kann so der Messbolzen 3 der Messuhr 2 zurückgehalten werden.

## Patentansprüche

1. Messuhrhalterung mit einem Halteteil (1) und einer im Halteteil (1) angeordneten Aufnahme zur lösbaren Befestigung einer Messuhr (2), **dadurch gekennzeichnet, dass** die Aufnahme eine in dem Halteteil (1) axial verstellbare und durch ein Sicherungselement (10) in einer gewünschten Stellung gegenüber dem Halteteil (1) fixierbare Aufnahmebuchse (8) mit einer festen Bezugsfläche (14) zur Definition einer Nullstellung der Messuhr (2) umfasst.

2. Messuhrhalterung nach Anspruch 1, **dadurch gekennzeichnet, dass** die Bezugsfläche (14) an einer Stirnseite eines Ringbunds (11) der Aufnahmebuchse (8) angeordnet ist.

3. Messuhrhalterung nach Anspruch 1 oder 2, **dadurch gekennzeichnet, dass** in die Aufnahmebuchse (8) eine mit der Messuhr (2) fest verbundene Einsteckbuchse (13) einsetzbar ist.

4. Messuhrhalterung nach Anspruch 3, **dadurch gekennzeichnet, dass** die Einsteckbuchse (13) eine vordere Stirnfläche (15) zur Anlage an der Bezugsfläche (14) der Aufnahmebuchse (8) enthält.

5. Messuhrhalterung nach einem der Ansprüche 3 oder 4, **dadurch gekennzeichnet, dass** die Einsteckbuchse (13) über eine Rastverbindung (18, 20) lösbar in der Aufnahmebuchse (8) gehalten wird.

6. Messuhrhalterung nach Anspruch 5, **dadurch gekennzeichnet, dass** die Rastverbindung (18, 20) durch einen in der Aufnahmebuchse (8) angeordneten Kugelrastbolzen (20) und eine zugehörige Rastnut (18) in der Einsteckbuchse (13) gebildet wird.

7. Messuhrhalterung nach einem der Ansprüche 1 bis 6, **dadurch gekennzeichnet, dass** an der Aufnahmebuchse (8) ein Einstellteil (22) mit einer Auflage (26) für einen Messkörper (4) der Messuhr (2) befestigt ist.

8. Messuhrhalterung nach Anspruch 7, **dadurch gekennzeichnet, dass** das Einstellteil (22) einen Schlitz (24) mit einer Anlagefläche (25) zur Anlage an der Bezugsfläche (14) der Aufnahmebuchse (8) enthält.

9. Messuhrhalterung nach einem der Ansprüche 1 bis 8, **dadurch gekennzeichnet, dass** an der Messuhr (2) ein Messuhrbügel (31) mit einem Halteteil (32) zur magnetischen Halterung einer am Ende eines Messbolzens (3) der Messuhr (2) angeordneten Endkappe (5) befestigt ist.

10. Messuhrhalterung nach einem der Ansprüche 7 bis 9, **dadurch gekennzeichnet, dass** die Aufnahmebuchse (8) ein geschlitztes Klemmstück (21) zur Verbindung mit einem Einspannschaft (17) der Messuhr (2) enthält.

11. Messuhrhalterung nach einem der Ansprüche 7 bis 10, **dadurch gekennzeichnet, dass** das Einstellteil (22) in einer Nut (23) auf der Oberseite des Halteteils (1) geführt ist.
